# EUROPEAN PATENT SPECIFICATION

(11) **EP 0 267 010 B1**
(45) Date of publication and mention of the grant of the patent: **20.04.1994**
(21) Application number: 87309734.9
(22) Date of filing: 04.11.1987
(51) Int. Cl.: B60S 1/38

(54) **Pivot joint**
Drehverbindung
Joint d'articulation

(30) Priority: 07.11.1986 GB 8626619
(43) Date of publication of application: 11.05.1988
(73) Proprietor: TRICO FOLBERTH LIMITED, Brentford, Middlesex TW8 9HP (GB)
(72) Inventor: Biggs, Peter John, Middlesex TW3 3SB (GB)
(74) Representative: Pedder, James Cuthbert

(56) References cited:
- FR-A- 2 443 949
- FR-A- 2 453 757
- GB-A- 2 048 658
- US-A- 3 416 180

## Description

This inventiom relates to a pivot joint which is particularly but not exclusively useful in the manufacture of windscreen wipers.

In the manufacture of windscreen wipers, a number of pivot joints are used, particularly between the various yokes and/or levers of the windscreen wiper blade.

Problems exist in the manufacture of windscreen wipers due to the necessity, very often, of pivoting metal parts together. These joints tend to be noisy and have a tendency to suffer from wear and corrosion. Various proposals have been made for overcoming these problems, for example, by the provision of plastics members between the metal parts of the joints, but these have not proved to be entirely satisfactory from a manufacturing standpoint although they have worked satisfactorily in use.

One form of joint has been proposed in British Patent Specification GB-A-2048658. This specification shows two embodiments. In the first embodiment shown in figures 1 to 6, there is shown a pivot joint having a substantially U-sectioned joint body having two connection means for connecting the joint body to a first and a second yoke of the harness of a windscreen wiper blade so as to form a pivot joint. Because the second yoke sits inside the joint body and the joint body in turn sits within the first yoke, they are difficult to assemble without the use of post forming operations. This patent has attempted to overcome this problem by the provision of a complicated connection in two parts between the first yoke and the joint body so as to enable the connection means between the first yoke and the joint body to be located at substantially effectively the same longitudinal position along the joint body as the connection means between the joint body and the second yoke.

The second embodiment, shown in figures 7 to 9, has a U-section joint body with a resilient tongue in each side wall carrying a pair of oppositely directed trunnions, one for engagement in an aperture of the first yoke and the other for engagement with an aperture in the second yoke. In order to achieve assembly of this embodiment, it is necessary to have an enlarged aperture in the second yoke so that the both trunnions and a part of the resilient tongue carrying them can enter this aperture to allow the first yoke to pass over them. However, this arrangement promotes play in the joint and there is the further necessity of trunnion carrying tongues to be very flexible to permit sufficient movement on assembly which can weaken the joint
The present invention seeks to provide a new and improved pivot joint which is relatively inexpensive to manufacture and use and which overcomes or reduces some or all of the above problems.

According to a first aspect of the invention, a joint body of substantially channel section for the pivotal connection of two longitudinal members has first connection means in opposite side walls of the channel for connection of one of the members to be pivoted which is intended to lie within the channel of the joint body and second connection means in the opposite side walls of the channel, spaced longitudinally from the first connection means and for connection of the other of the members to be pivoted which is intended to lie, at least in part, around the outside of the channel of the joint body, the side walls of the channel in the region of the first connection means being movable resiliently inwardly of the channel and the side walls of the channel in the region of the second connection means being movable resiliently outwardly of the channel for springing back into engagement with the side walls of each of the longitudinal members respectively, and at least one of the first and second connection means comprising pivot means.

According to a second aspect of the invention, a pivot joint comprises a first member which is of channel section at least at one end, a second member pivotable to said one end of the first member and adapted to sit within the channel section of the first member with clearance and a joint body as above described.

Preferably, the connection means each comprise a pair of trunnion like projections, the projections of the first connection means projecting into the channel while the projections of the second connection means project outwardly of the joint body, parallel to the projections of the first connection means.

The invention will now be described in greater detail, by way of example, with reference to the drawings, in which:
Figure 1 is a perspective view of one form of pivot joint in accordance with the invention;
Figure 2 is a perspective view of the joint body used in the pivot joint of figure 1;
Figure 3 is a perspective exploded view of the joint shown in figure 1;
Figure 4 is a sectional view of the joint body taken on the line IV-IV of figure 2;
Figure 5 is a sectional view of the joint body taken on the line V-V of figure 2, and
Figure 6 is a view similar to figure 2 but showing a modified joint body.

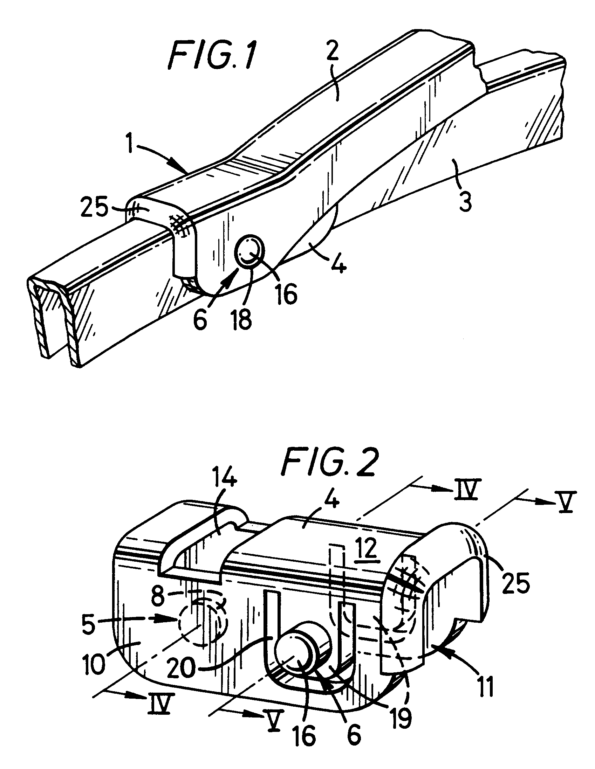

Referring firstly to figures 1 to 5, there is shown a joint 1 formed between two members 2 and 3, suitably a main and a secondary yoke respectively of a windscreen wiper blade harness. These yokes would normally be made of channel section metal.

The pivot joint 1 comprises a plastics joint body 4 which is generally of channel section having two pairs of longitudinally spaced connection means 5 and 6, the first (5) of which is intended to make pivotal connection with the secondary yoke 3 while the second (6) of which is intended to make connection with the main yoke 2.

The first connection means 5 is in the form of two inwardly directed projections 8 in the form of trunnion members which, when the joint is assembled, cooperate with receiving apertures 9 in the secondary yoke 3. In order to increase The resilience of the sides 10 of the channel 11 of the joint body 4 at this point, the base 12 of the channel 11 is provided with a "cut away" portion 14 which is aligned with the projections 8.

The second connection means 6 is in the form of two outwardly directed projections 16 in the form of trunnion members which, when the joint is assembled, cooperate with receiving apertures 18 on the main yoke 2. In order to provide resiliency for the projections 16, each projection 16 is carried on a tongue 19 which is formed by "cut outs" 20 which surround the projections 16 on three sides. In the embodiment shown, the tongues 19 are attached to the joint body 4 towards the base 12 of the channel 11. In order to allow for flexing of the tongues 19, the secondary yoke 3 is provided with cut away portions 22 as will be described hereafter. The corner of the channel 11 where the base 12 joins the side walls 10 is provided with inclined portions 23 aligned with the tongues 19 which provides locating means cooperating with the cut away portions 22 in the secondary yoke 3.

In addition to the connection means 5 and 6, the joint body 4 is provided at one end with a partially surrounding upstanding flange 25. This flange 25 is located against the end of the main yoke 2 and acts both as a locating arrangement for the joint body 4 and also protects the otherwise open end of the yoke 2 against the ingress of foreign materials and relieves the projections 8 and 16 from end forces on the windscreen wiper blade.

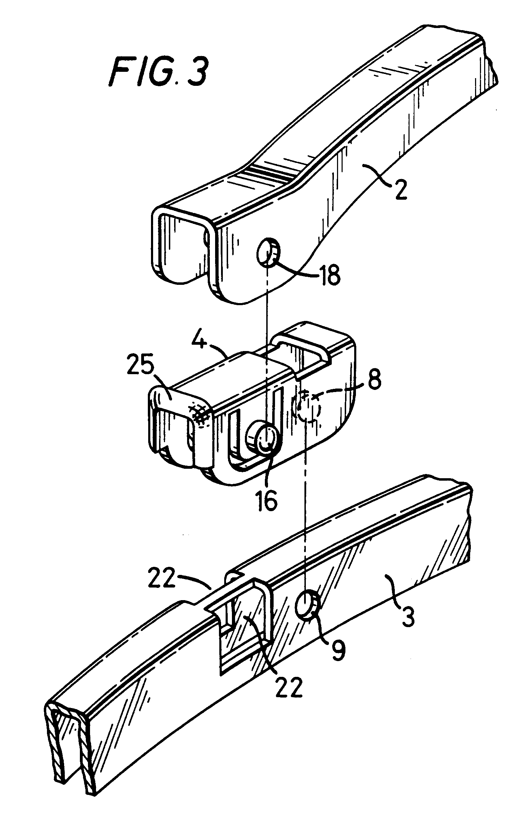

The assembly of a joint in accordance with the invention will now be described with particular reference to figure 3:
The yokes 2 and 3 are press formed from metal sheet in the usual way. In addition to the usual form of the secondary yoke 3, the yoke 3 is also provided with the cut away portions 22. The joint body 4 is moulded from a suitable plastics material.

The joint body 4 is positioned on the secondary yoke 3 and is aligned therewith such that the tongues 19 are aligned above the cut away portions 22 and the projections 8 are lined up above the usual pivot apertures 9 in the yoke 3. The joint body 4 can then be forced down on the secondary yoke 3. In so doing, the sides 10 of the channel adjacent the projections 8 will be forced resiliently outwards, assisted by the aperture 14 in the channel base 12. Once the two projections 8 have become completely aligned with the apertures 9 in the yoke, the sides 10 of the channel 11 of the joint body 4 will spring back, pushing the projections 8 into the apertures 9. The inclined portions 23 of the channel 11 will locate in the upper part of the cut away portions 22 in the yoke 3.

The joint body 4, together with the secondary yoke 3 can now be offered up to the primary yoke 2. In this case the end of the primary yoke 2 is aligned with the flange 25 of the joint body 4 and the apertures 18 are aligned with the projections 16. As the joint body 4 is pushed up into the main yoke 2, the tongues 19 carrying the projections 16 can be resiliently pushed back into the cut away portions 22 of the secondary yoke 3, enabling insertion of the joint body into the primary yoke until the members are aligned with the apertures and can enter the apertures when the tongues 19 swing back.

It will be appreciated that in the form shown, pivot action will only take place about the pivot means 5, the joint body 4 being constrained against relative movement with respect to primary yoke by the flange 25.

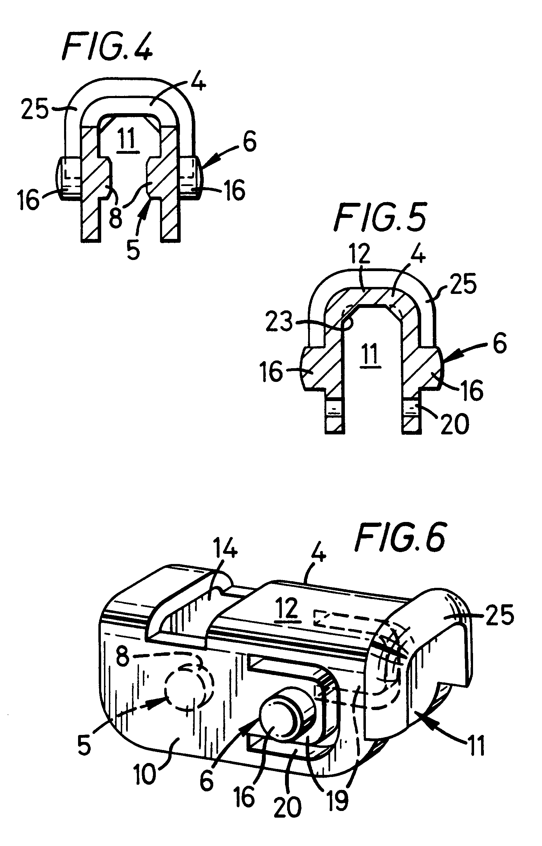

Figure 6 shows an alternative form of joint body 4. In this form of joint body, the tongues 19 carrying the projections 16 are aligned at right angles to those in figure 2 and thus lie longitudinally of the length of the joint body 4.

It will be appreciated that various modifications may be made to the above described embodiments without departing from the scope of the invention. For example, if the flange 25 on the joint body 4 were omitted, a dual pivoting action could take place, the pivotal features of both connection means 5 and 6 being brought into use. Alternatively, arrangements could be made for securing the joint body 4 against rotation relative to the secondary yoke 3 so that only the pivotal feature of the connection means 6 is used.

If the end of the primary yoke 2 were radiussed about the aperture 18, then the pivotal feature of the connection means 6 could be used without removal of the flange 25, which could, if desired have the same curvature as the yoke end.

It will also be appreciated that while the pivot joint has been described as part of a windscreen wiper blade, the invention can apply to any other suitable type of pivot joint.

## Claims

1. A joint body (4)of substantially channel section for the pivotal connection of two longitudinal members (2,3) having first connection means (5) in opposite side walls (10) of the channel (11) for connection of one of the members (3) to be pivoted which is intended to lie within the channel (11) of the joint body (4), second connection means (6) are provided in the opposite side walls (10) of the channel (11), spaced longitudinally from the first connection means (5) and for connection of the other of the members (2) to be pivoted which is intended to lie, at least in part, around the outside of the channel (11) of the joint body (4), the side walls (10) of the channel (11) in the region of the first connection means (5) being movable resiliently inwardly of the channel (11) and the side walls (10) of the channel (11) in the region of the second connection means (6) being movable resiliently outwardly of the channel (11) for springing back into engagement with the side walls of each of the longitudinal members (2,3) repectively, and at least one of the first and second connection means (5,6) comprising pivot means.

2. A pivot joint (1) comprising a first member (2) which is of channel section at least at one end, a second member (3) pivotable to said one end of the first member (2) and adapted to sit within the channel section of the first member (2) with clearance and a joint body (4) according to claim 1.

3. A pivot joint as claimed in claim 2, wherein the connection means (5,6) each comprise a pair of trunnion like projections (8,16), the projections (8) of the first connection means (5) projecting into the channel (11) while the projections (16) of the second connection means (6) project outwardly of the joint body (4), parallel to the projections (8) of the first connection means (5).

4. A pivot joint as claimed in claim 3, wherein the side walls (10) of the channel (11) of the joint body (4) in the region of the first connection means (5) is rendered resilient by removal of the base (12) of the channel (11) of the joint body (4) in a region aligned with the first connection means (5).

5. A pivot joint as claimed in claim 3 or 4, wherein the the projections (16) of the second connection means (6) are mounted on tongues (19) cut out from the side walls (10) of the channel (11) of the joint body (4).

6. A pivot joint as claimed in claim 5, wherein the tongues (19) extend at right angles to the base (12) of the channel (11) of the joint body (4).

7. A pivot joint as claimed in claim 5, wherein the tongues (19) extended parallel to the line of the channel (11) of the joint body (4).

8. A pivot joint as claimed in any one of claims 2 to 7, wherein the members (2,3) are yokes of a windscreen wiper blade.

9. A pivot joint as claimed in claim 8, wherein the first member (2) is the primary yoke and the second member (3) is the secondary yoke of the windscreen wiper blade.

## Patentansprüche

1. Verbindungskörper (4) mit im wesentlichen U-förmigem Querschnitt für die schwenkbare Verbindung von zwei länglichen Bauteilen (2, 3), der ein erstes Verbindungsglied (5) in gegenüberliegenden Seitenwänden (10) des U-Profils zur Verbindung von einem der einzusetzenden Bauteile (3), das so eingesetzt wird, daß es im U-Profil des Verbindungskörpers liegt, und ein zweites Verbindungsglied (6) aufweist, das in gegenüberliegenden Seitenwänden (10) des U-Profils (11) vorgesehen, in Längsrichtung räumlich von dem ersten Verbindungsglied (5) getrennt ist und zur Verbindung des anderen der zu schwenkenden Bauteile (2), das so vorgesehen ist, daß es zumindest teilweise die Außenseite des U-Profils (11) des Verbindungskörpers (4) umgibt, wobei die Seitenwände (10) des U-Profils (11) im Bereich des ersten Verbindungsglieds (5) elastisch zur Innenseite des U-Profils (11) hin bewegbar sind und die Seitenwände (10) des U-Profils (11) im Bereich des zweiten Verbindungsgliedes (6) elastisch zur Außenseite des U-Profils hin bewegbar sind, um in den Eingriff mit den Seitenwänden jedes der länglichen Bauteile (2, 3) zurückzufedern und wenigstens eines der ersten und zweiten Verbindungsglieder (5, 6) eine Schwenkeinrichtung umfaßt.

2. Schwenkverbindung (1), die ein erstes Bauteil (2), welches einen U-förmigen Querschnitt wenigstens an einem Ende aufweist, ein zweites Bauteil (3), schwenkbar gelagert zu dem einem Ende des ersten Bauteils (2) und, angeglichen, um innerhalb des U-förmigen Querschnitts des ersten Teils (2) mit Aussparung zu sitzen und einen Verbindungskörper (4), entsprechend Anspruch 1, umfaßt.

3. Schwenkgelenkverbindung nach Anspruch 2, wobei die Verbindungsglieder (5, 6) jeweils ein Paar von zapfenförmigen Vorsprüngen (8, 16) umfassen, die Vorsprünge (8) des ersten Verbindungsgliedes (5) sich in die Innenseite des U-Profiles (11) hinein erhebend, während die Vorsprünge (16) des zweiten Verbindungsgliedes sich außerhalb des Verbindungskörpers (4) erheben, parallel zu den Vorsprüngen (8) des ersten Verbindungsgliedes (5).

4. Schwenkverbindung nach Anspruch 3, wobei die Seitenwände (10) des U-Profils (11) des Verbindungskörpers (4) im Bereich des ersten Verbindungsgliedes (5) elastisch gemacht sind durch das Entfernen des Bodens (12) des U-Profils (11) des Verbindungskörpers (4) in einem Bereich, der an das erste Verbindungsglied (5) angeglichen ist.

5. Schwenkverbindung nach Anspruch 3 oder 4, wobei die Vorsprünge (16) des zweiten Verbindungsgliedes (6) an Laschen (19) angebracht sind, die von den Seitenwänden (10) des U-Profils (11) des Verbindungskörpers (4) ausgeschnitten sind.

6. Schwenkverbindungen nach Anspruch 5, wobei die Laschen (19) sich im rechten Winkel zu dem Boden (12) des U-Profils (11) des Verbindungskörpers (4) erstrecken.

7. Schwenkverbindung nach Anspruch 5, wobei die Laschen (19) sich parallel zu der Linie des U-Profils (11) des Verbindungskörpers (4) erstrecken.

8. Schwenkverbindung nach einem der Ansprüche 2 bis 7, wobei die Bauteile (2, 3) Arme von einem Windschutzscheibenwischerblatt sind.

9. Schwenkverbindung nach Anspruch 8, wobei das erste Bauteil (2) der erste Arm und das zweite Bauteil (3) der zweite Arm eines Windschutzscheibenwischerblattes ist.

## Revendications

1. Un corps de joint d'articulation (4) à section transversale sensiblement en canal, destiné à relier à pivotement deux éléments longitudinaux (2, 3), comprenant un premier moyen de liaison (5) formé dans des parois latérales opposées (10) du canal (11) et destiné à la liaison de l'un des éléments (3) à faire pivoter, qui est prévu pour être situé à l'intérieur du canal (11) du corps de joint d'articulation (4), un deuxième moyen de liaison (6) formé dans les parois latérales opposées (10) du canal (11), espacé longitudinalement du premier moyen de liaison (5) et destiné à la liaison de l'autre des éléments (2) à faire pivoter, qui est prévu pour reposer, au moins en partie, autour de l'extérieur du canal (11) du corps de joint d'articulation (4), les parois latérales (10) du canal (11) dans la zone du premier moyen de liaison (5) étant mobiles élastiquement vers l'intérieur du canal (11) et les parois latérales (10) du cartel (11) dans la zone du deuxième moyen de liaison (6) étant mobiles élastiquement vers l'extérieur du canal (11) pour revenir élastiquement en contact avec les parois latérales de chacun des éléments longitudinaux (2, 3), respectivement, et au moins l'un des premier et des deuxième moyen de liaison (5, 6) comprenant un moyen de pivot.

2. Un joint d'articulation à pivot (1) comprenant un premier élément (2) à section transversale en canal au moins à une première extrémité, un deuxième élément (3) pouvant pivoter sur ladite première extrémité du premier élément (2) et apte à reposer à l'intérieur de la section de cartel du premier élément (2) en laissant un jeu, et un corps de joint d'articulation (4) selon la revendication 1.

3. Un joint d'articulation à pivot selon la revendication 2, dans lequel les moyens de liaison (5, 6) comprennent chacun une paire de saillies en forme de tourillons (8, 16), les saillies (8) du premier moyen de liaison (5) faisant saillie dans le canal (11) tandis que les saillies (16) du deuxième moyen de liaison (6) font saillie vers l'extérieur du corps de joint d'articulation (4), parallèlement aux saillies (8) du premier moyen de liaison (5).

4. Un joint d'articulation à pivot selon la revendication 3, dans lequel les parois latérales (10) du canal (11) du corps de joint d'articulation (4) sont rendues élastiques dans la zone du premier moyen de liaison (5) en enlevant la base (12) du canal (11) du corps de joint d'articulation 4 dans une zone alignée avec le premier moyen de liaison (5).

5. Un joint d'articulation à pivot selon la revendication 3 ou 4, dans lequel les saillies (16) du deuxième moyen de liaison (6) sont montées sur des languettes (19) découpées dans les parois latérales (10) du canal (11) du corps de joint d'articulation (4).

6. Un joint d'articulation à pivot selon la revendication 5, dans lequel les languettes (19) s'étendent à angles droits par rapport à la base (12) du canal (11) du corps de joint d'articulation (4).

7. Un joint d'articulation à pivot selon la revendication 5, dans lequel les languettes (19) s'étendent parallèlement à la ligne du canal (11) du corps de joint d'articulation (4).

8. Un joint d'articulation à pivot selon l'une quelconque des revendications 2 à 7, dans lequel les éléments (2, 3) sont des étriers d'une lame d'essuie-glace de pare-brise.

9. Un joint d'articulation à pivot selon la revendication 8, dans lequel le premier élément (2) est l'étrier primaire et le deuxième élément (3) est l'étrier secondaire de la lame d'essuie-glace de pare-brise.
